# EUROPEAN PATENT APPLICATION

(11) **EP 0 537 103 A1**
(43) Date of publication of application: **14.04.1993**
(21) Application number: 92500129.9
(22) Date of filing: 09.10.1992
(51) Int. Cl.: B29C 53/08

(54) **Procedure for the manufacture of rubber tubes with straight and curved sections**

(30) Priority: 11.10.1991 ES 9102249
(71) Applicant: VINCKE, S.A., E-17230 Palamos (Gerona) (ES)
(72) Inventor: Trijueque Fonadellas, Pedro, E-17230 Palamos (Gerona) (ES)
(74) Representative: Gomez-Acebo y Pombo, José Miguel

(57) **Abstract**

Procedure for the manufacture of rubber tubing with both straight and curved sections, consisting of the following stages: A) extrusion of an internal rubber wall. B) Braided reinforcement on said internal wall. C) Extrusion of an external wall around the braiding, D) Wrapping around the external rubber wall. E) Vulcanization of the rubber tubing. Before the final vulcanizing operation, the tubing is shaped by means of moulds which curve or change the direction of the tubing (2), and are then carried together with the tubing through the vulcanizing oven,

The tubes obtained by this process are applicable to hydraulic control and operational systems for automobiles.

## Description

This invention deals with a procedure for the manufacture of rubber tubes with straight and curved sections, preferably for tubes provided with textile fibre or steel based reinforcement. The invention also comprises the oven in which these tubes are vulcanized.

Rubber tubes with textile fibre or steel reinforcement are produced in straight sections and are widely used in installations requiring the transfer of fluids, in which it it usually necessary to adapt the tube to irregular trajectories with curved sections.

In certain applications, in automobiles for example, tubes for the transfer of different fluids must always follow the fixed trajectory imposed by each vehicle model. It is therefore necessary to adapt the tubes during the mounting phase, an operation that is constantly repeated in all the vehicles of the same model.

The purpose of this invention entails the use of a procedure by which the above mentioned tubes can be produced with the specific shapes corresponding to their final mounted position. This eliminates the work involved in adapting the tubes to their trajectories and the subsequent advantages of labour savings and better performance of the tubes.

The traditional procedure for producing straight, reinforced rubber tubes is made up of the following stages:
A) Extrusion of an internal rubber wall around a mandrel.
B) Textile or wire reinforcement braiding around the mentioned internal wall.
C) Extrusion of an external rubber wall around the braiding.
D) Wrapping around the external rubber wall.
E) Vulcanization of the rubber tube assembly.

The most notable aspect of the manufacturing procedure of the invention is that the tube is shaped to the trajectory it will follow in its final installed position, before it is vulcanized. This shaping process is carried out by means of moulds which form the curves or directional changes of the tube. The tube forming moulds are carried with the tube through the oven during the vulcanizing process, and they are separated from the tube at the oven outlet.

Another feature of this invention is the mandrel, around which the internal rubber wall is extrudedIt is very flexible, and preferably made up of consecutively interconnected sections.

The described manufacturing process is performed in an oven, in which hydraulic or pneumatic cylinders push the moulds through the interior, the last one to enter pushing the one before it. In this way, the moulds are driven through the oven by the push cylinders, which consecutively transmit their initial thrust from one mould to the other along the vulcanizing line.

At the oven outlet, the moulds are returned to the infeed position by an endless chain located at the lower, exterior part of the oven.

The mould forming-heads are located at the feed section, and coincide with the concave side of the curved sections, presenting a lateral surface which coincides with the trajectory of the curve and the tube section.

Tubes produced by means of the process and oven of this invention substantially reduce the amount of waste with respect to straight tubes, and shorten to a large extent the amount of time involved in mounting the tubes. In addition; the process indicated by this invention allows the manufacture of any type of low, medium or high pressure rubber tube with the same properties as straight tubes, maintaining non-variable internal diameters, to allow the production of tubes with closer tolerances.

Using the tube manufacturing process of the invention, the shaping of the tubes is exterior, and is not affected by the number of curved sections required, nor by the total length of the sections to be produced.

The characteristics of the invention, as listed in the claims sheet, can be better understood by reading the following description, made with reference to the adjoined drawings showing, by way of a non-limiting example, an installation using the manufacturing process of this invention.

In the drawings:

Figure 1 shows a schematic side elevation of an installation for producing rubber tubes with both straight and curved sections.

Figure 2 is a plan view of the installation in Figure 1.

Figure 3 is a plan view of the trajectory followed by the tube through the vulcanizing oven, as it is pushed along by the shaping moulds.

Figure 4 is a side elevation of Figure 3, with all the moulds situated at the same height.

Figure 5 is a similar view of Figure 4, with the moulds positioned at different heights and inclinations.

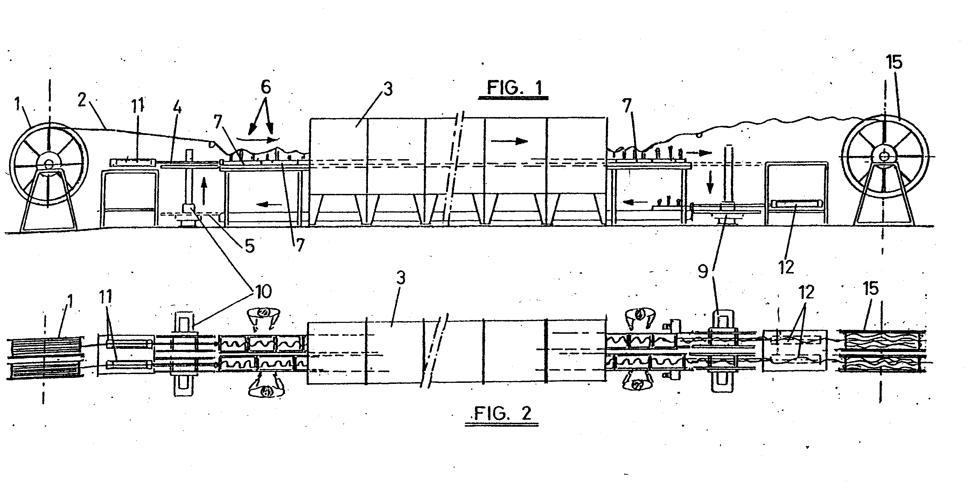

No. 1 in Figure 1 is the drum around which the straight tubing is rolled. This tubing is the traditional type, composed of rubber with textile fibre or wire reinforcement. In No. 2, the untreated tubing is on its way to the vulcanizing oven represented by No. 3.

This oven (3) includes a hydraulic or pneumatic pushing system (4) which introduces the moulds into the interior of the oven. The moulds are returned by means of an endless chain (5) which runs beneath the oven (3).

The moulds (6), each of which can be seen in Figures 1, 3 and 4, are provided with an anchoring base. As the moulds are introduced into the oven (3), the anchoring bases slide along fixed guide tracks (7), located inside the oven (3).

The installation includes an empty-mould discharge table (9), which transfers them to an endless chain beneath the exterior of the oven (3). Hydraulic or pneumatic cylinders (12) push the empty moulds onto the mentioned endless chain, which then transports them to the beginning of the cycle, where another lifting table (10) places them at the oven entrance (3).

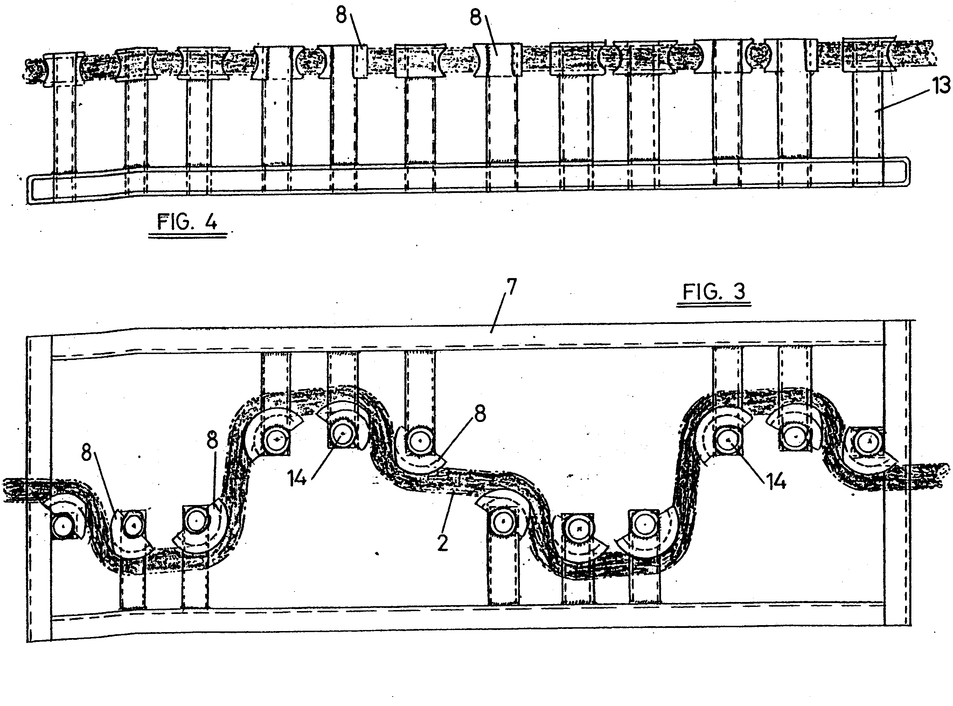

The shaping heads (8) of the moulds are located at the feed zone line, coinciding with the concave side of the curved sections, as shown in Figure 3. These moulds present a lateral surface which coincides with the trajectory of the curve and the tube section.

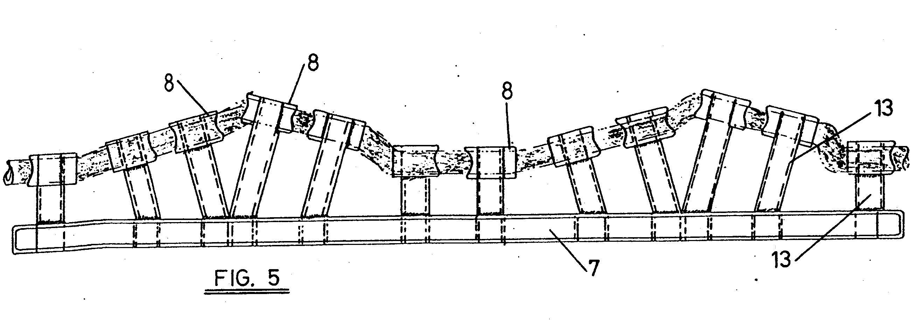

A pillar (13), with a shaping head at the top end, rises from the mould anchoring base. This head turns on a shaft (14), Figure 3, and is coaxial with the pillar. All the pillars (13) of the different shaping heads can be set at the same height, as shown in Figure 4, so that all the heads (8) are in a coplanar, horizontal position. Also, as shown in Figure 5, the pillars in the feed section can, at least some of them, slide along in an inclined position, and be of different lengths, so that the shaping heads (8) are set at different heights and inclinations.

With the set up described above, the tubing (2) will follow the trajectory shown in Figures 3 and 5, and will maintain this configuration during its passage through the interior of the vulcanizing oven. The tubing will be adapted to the pre-established shape of the installation in which it is to be mounted.

The formed tubing is rolled onto a drum (15), and the mandrel inside the tubing is then extracted: In this operation, the different sections that make up the mandrel are separated by removing the clamps that join them together. The interior mould is then removed by pressure water, as in traditional systems.

Finally, the shaped tubing is cut into pre-established established sections, preferably using a tool with the same configuration of the tube section to be cut, to ensure said configuration, and to control the length of the section to be cut.

Due to the consecutive feed system of the mould anchoring bases, there should always be a fixed number of moulds inside the oven, as each time a tool exits the oven, a new one enters it. Also, this positioning system allows the displacement of the moulds by a consecutive pushing operation. The speed of passage through the oven will depend on the type of vulcanization to be carried out.

As indicated earlier, the mandrel used in the manufacturing process of this invention, is made up of sections of a specific length. The different mandrel sections are interconnected by clips, clamps, etc. which progressively unite the cable ends of the different sections.

## Claims

**1 -** Procedure for the manufacture of rubber tubing with both straight and curved sections, consisting of the following stages: A) extrusion of an internal rubber wall on a mandrel. B) Braided textile or wire reinforcement on said internal wall. C) Extrusion of an external wall around the braiding. D) Wrapping around the external rubber wall. E) Vulcanization of the assembled tubing in a vulcanizing oven, characterized by the fact that before the vulcanizing operation, the tubing section is shaped by means of moulds which curve or change the direction of the tubing, and are then carried together with the tubing through the oven during the vulcanizing process, the moulds separating from the shaped tubing at the oven outlet; the mandrel around which the internal rubber wall is extruded being very flexible, and made up of sections which are consecutively interconnected.

**2 -** Claim 1 procedure, characterized by cutting the tubing into pre-established sections by means of a tool which has the same shape and configuration of the section to be cut, after the mandrel has been removed.

**3 -** Oven for the vulcanization of rubber tubing, with straight and curved sections, characterized by tracks, or guides in the interior of the oven, along which a series of moulds advance; the moulds are provided with an anchoring base and a shaping head; the anchoring bases of the different moulds remain in consecutive contact, while the shaping heads are located along the feed line, coinciding with the concave side of the curved sections, and present a lateral surface coinciding with the curve and tubing section.

**4 -** Oven as indicated in Claim 3, characterized by pillars rising from the mould bases, with shaping heads at the top end, with the capacity to turn round a shaft, coaxially positioned with the pillar.

**5 -** Oven as indicated in Claims 3 and 4, characterized by the fact that along the feed line, all the pillars are vertical and of the same height, and all the shaping heads remain in a coplanar, horizontal position.

**6-** Oven as indicated in Claims 3 and 4, characterized by the fact that along the feed line, at least some of the pillars move in an inclined position, and are of different lengths, the shaping heads set at different heights and inclinations.
